# EUROPÄISCHE PATENTSCHRIFT

(11) **EP 1 285 096 B1**
(45) Veröffentlichungstag und Bekanntmachung des Hinweises auf die Patenterteilung: **05.11.2003**
(21) Anmeldenummer: 01945028.7
(22) Anmeldetag: 20.04.2001
(51) Int. Cl.: C21B 5/00, C21B 13/14

(54) **VERFAHREN UND VORRICHTUNG ZUR HERSTELLUNG VON ROHEISEN ODER FLÜSSIGEN STAHLVORPRODUKTEN AUS EISENERZHÄLTIGEN EINSATZSTOFFEN**
METHOD AND DEVICE FOR PRODUCING PIG IRON OR LIQUID STEEL PRE-PRODUCTS FROM CHARGE MATERIALS CONTAINING IRON ORE
PROCEDE ET DISPOSITIF DE PRODUCTION DE FONTE BRUTE OU DE PRODUITS SEMI-FINIS EN ACIER FLUIDES A PARTIR DE MATIERES DE CHARGEMENT CONTENANT DU FER

(30) Priorität: 15.05.2000 AT 8392000
(43) Veröffentlichungstag der Anmeldung: 26.02.2003
(73) Patentinhaber: Voest-Alpine Industrieanlagenbau GmbH & Co., 40219 Düsseldorf (DE)
(72) Erfinder: KEPPLINGER, Leopold, Werner, A-4060 Leonding (AT); MIZELLI, Herbert, A-4563 Micheldorf (AT); WURM, Johann, A-4283 Bad Zell (AT)
(74) Vertreter: VA TECH Patente GmbH & Co
(86) Internationale Anmeldenummer: EP0104543
(87) Internationale Veröffentlichungsnummer: WO01088207

(56) Entgegenhaltungen:
- WO-A-97/28284
- AT-B- 323 213
- DE-A- 4 421 673
- DE-C- 3 248 249
- US-A- 3 884 677
- US-A- 4 804 408

## Beschreibung

Die Erfindung betrifft ein Verfahren zur Herstellung von Roheisen oder flüssigen Stahlvorprodukten in einem Hochofen, wobei mindestens ein Teilstrom eines aus einem Reduktions-Schachtofen austretenden Topgases weitgehend von CO₂ befreit wird, gegebenenfalls erwärmt, und in den Hochofen als Reduktionsgas eingeleitet wird, sowie eine Anlage zur Durchführung dieses Verfahrens.

Ein Verfahren dieser Art ist aus DE4421673A1 bekannt. Bei diesem wird das Topgas nach einer CO₂-Entfernung mit heißem Stickstoff oder mit heißem stickstoff- und argonhältigem Gas vermischt und damit auf über 800 °C erwärmt. Dabei wird erwärmtes und von CO₂ weitgehend befreites Topgas über eine Heißwindringleitung dem Hochofen zugeführt. Das Erwärmen des Topgases muß dabei äußerst rasch unter Vermeidung einer Umsetzung des CO-Gases nach dem Boudouard-Gleichgewicht bzw. der Vermeidung der Umsetzung des H₂-Gases nach der heterogenen Wassergasreaktion durchgeführt werden, wodurch ein erheblicher prozess- und anlagentechnischer Aufwand entsteht.

Ein Verfahren zur Direktreduktion von Eisenerzen behandelt US3954444A1. Darin wird einem Schachtofen ein Teil des reduzierenden Gases entzogen, aufbereitet und nachfolgend wiederum dem Schachtofen zugeführt. Dabei kann das reduzierende Gas in einer besonderen Ausführungsform auch als reduzierendes Mittel in einen Hochofen eingebracht werden. Auch in diesem Verfahren ist die Regenerierung des Gases umständlich und erfordert hohen prozess- und anlagentechnischen Aufwand.

Unter dem Gesichtspunkt des Standes der Technik ist es eine Aufgabe der Erfindung, ein Verfahren sowie eine Anlage zur Durchführung dieses Verfahrens zu entwickeln, womit gegenüber dem Stand der Technik eine verbesserte Energiebilanz, sowie eine verbesserte Prozessführung erreicht wird

Die gestellte Aufgabe wird erfindungsgemäß durch den kennzeichnenden Teil des Anspruches 1, in bezug auf ein erfindungsgemäßes Verfahren, sowie durch den kennzeichnenden Teil des Anspruches 5, in bezug auf eine erfindungsgemäße Anlage gelöst.

Der obere Kegelstumpf eines Hochofens, welcher in etwa drei Fünftel seiner Höhe ausmacht, wird vom Fachmann mit dem Begriff Schacht bezeichnet.

Durch das erfindungsgemäße Merkmal, das erwärmte Topgas in den unteren Bereich des Hochofen-Schachtes einzuleiten, werden gegenüber dem Stand der Technik entscheidende Vorteile in der Verfahrensführung erreicht.

Die Erfindung sieht insbesondere die vollständige prozesstechnische Weiterverwendung des Topgases des Schachtofens vor. Dabei wird das Topgas des Schachtofens einer Weiterverwendung, vorzugsweise hinsichtlich seiner reduzierenden Eigenschaften zugeführt. Ein Teilstrom dieses Topgases kann dabei nach dem erfindungsgemäßen Verfahren in einen Hochofen eingeleitet werden, wohingegen ein weiterer Teilstrom beispielsweise für die Energieerzeugung eingesetzt werden kann. Wesentlich ist jedoch, dass das Topgas nach Durchtritt durch den Schachtofen abgezogen wird, und nicht etwa, wie im Stand der Technik, ein Teilstrom am Schachtofen abgezweigt wird. Mit der erfindungsgemäßen Verfahrensweise wird gegenüber diesem Stand der Technik eine weitaus effizientere Erwärmung des Möllers im Schachtofen verwirklicht, welche für den Betrieb ein wesentliches Kriterium darstellt.

Nach einer besonders bevorzugten Ausführungsform der Erfindung wird das gesamte Topgas des Schachtofens in den Hochofen eingeleitet.

Weiters werden durch die solchermaßen erfindungsgemäß ausgeführte Gaszufuhr oberhalb des Kohlesackes, der Kohlesack und die Rast thermisch entlastet, und die Gaspermeabilität dieses Bereiches sowie die Drainage der Flüssigphase verbessert.

Die Stelle der Topgaszuführung am unteren Bereich des Hochofenschachtes ist dabei im wesentlichen durch die Zusammensetzung des Topgases des betreffenden Verfahrens bestimmt.

Nachdem jedes Topgas eine besondere, für das jeweilige Verfahren aus dem es stammt im allgemeinen charakteristische Zusammensetzung aufweist, muß unter den bekannten Rahmenbedingungen jene Stelle der Einleitung des Gases am Schacht des Hochofens ermittelt werden, die den Betrieb des Hochofens an einem optimierten Betriebspunkt ermöglicht.

Folgende Aussagen können über besagte Stelle am Schacht des Hochofens, an welcher das Topgas in den Hochofen eingeleitet wird, getroffen werden:

Die Stelle der Einleitung befindet sich im allgemeinen, örtlich gesehen, oberhalb der kohäsiven Zone bzw. oberhalb der Zone der direkten Reduktion, und damit am Schacht des Hochofens. Die Position der Stelle der Einleitung des Topgases am Hochofenschacht wird einerseits durch die Temperatur und Zusammensetzung des Topgases, sowie andererseits durch den Betrieb des Hochofens bestimmt. Entscheidend ist dabei die Wirkung, die durch das Einleiten des Topgases erreicht wird.

Die diesbezüglich für die Abstimmung der Zusammensetzung des Topgases entscheidende Wirkung des Topgases auf die Einsatzmittel des Hochofenprozesses liegt einerseits in der Erhöhung des Anteils der indirekten Reduktion durch Zuführung von Reduktionsgas, wobei sich in gleicher Weise der Anteil der direkten Reduktion, die im Hochofen zu einem unerwünschten Kohlenstoffverbrauch und zu einer starken energetischen Belastung des Prozesses führt, im Verfahren verringert wird, und andererseits in einer bedeutend höheren Aufheizgeschwindigkeit und damit weniger Erzzerfall, sowie damit verbunden einem größeren Reaktionsvolumen innerhalb der Chargierung des Hochofens.

Nach einer bevorzugten Ausführungsform der Erfindung ist die Temperatur des Topgases vor Eintritt in den Hochofen höher als 750° C, vorzugsweise zwischen 750° C und 1100° C, in vorteilhafter Weise zwischen 800° C und 920° C und besonders vorteilhaft zwischen 820° C bis 880° C, wobei dieses Gas am unteren Ende des Hochofenschachtes zur Reduktion des Wüstits in den Hochofen eingeleitet wird.

Dabei werden am Ort der Einleitung des Gases in einem herkömmlichen, dem Stand der Technik entsprechendem Hochofen, in den äußeren Schichten der Hochofenchargierung Temperaturen von 1100° C und darunter, in einer vorteilhaften Ausführung von weniger als 1000° C, und in einer besonders vorteilhaften Ausführung von weniger als 900° C erreicht.

Nach einer besonders vorteilhaften Ausführungsform weist das erfindungsgemäße Verfahren zur Herstellung von Roheisen oder flüssigen Stahlvorprodukten einen Einschmelzvergaser auf, der reduzierte Eisenpartikel in Roheisen überführt und dabei ein Reduktionsgas bildet. Dieses Reduktionsgas eignet sich in besonderem Maße zur nachfolgenden Verwendung in einem Reduktions-Schachtofen, und dient des weiteren als Grundlage des Topgases, welches im Sinne der Erfindung in den unteren Bereich des Hochofenschachtes eingeleitet wird.

Nach einem weiteren Merkmal der Erfindung, wird das weitgehend CO₂-freie Topgas durch Teilverbrennung auf über 800° C erwärmt.

In dieser Weise erfolgt durch die Teilverbrennung eine Einstellung des CO₂/H₂O Gehaltes des Topgases, um so die Zusammensetzung des in den Hochofen einzuleitenden Topgases entsprechend, wie ausgeführt, abzustimmen, und insbesondere die Ausscheidung von Kohlenstoff im Hochofen zu vermindern. Das Vermindern des Auftretens von solcherart feinverteiltem Kohlenstoff wirkt sich positiv auf den energetischen Haushalt des Prozesses aus.

Ausgehend von einer für ein bestimmtes Verfahren typischen Topgaszusammensetzung wird durch Einleitung des Topgases in den Hochofen in den unteren Bereich des Hochofenschachtes nicht nur der Koksverbrauch gesenkt, sondern darüber hinaus der Oxidationsgrad des eingeleiteten Topgases auf den jeweiligen Bereich des Hochofens in den das Topgas eingeleitet werden soll, abgestimmt, und auf diese Weise der Betrieb des Hochofenaggregates optimiert.

Wurde das erwärmte Topgas bisher über eine herkömmliche Heißwindleitung in den Hochofen eingebracht und mußte deshalb einen besonders niedrigen Gehalt an CO₂ und H₂O aufweisen, ist bei einer Einleitung des Gases an einer Stelle deutlich über der herkömmlichen Heißwindleitung am Schacht des Hochofens ein höherer Gehalt an CO₂ und H₂O ausdrücklich erwünscht.

Durch die erfindungsgemäße Maßnahme, das weitgehend CO₂-freie Topgas durch Teilverbrennung zu erwärmen, wird jene Verfahrensweise im Stand der Technik, welche eine Erwärmung des Topgases mit heißem Stickstoff oder Stickstoff- und argonhältigem Gas vorsah, ersetzt, und eine weitaus zweckmäßigere Form der Erwärmung des Topgases eingeführt. Durch die zumindest teilweise Umsetzung des Topgases durch partielle Oxidation, erfolgt eine maßgebliche Temperaturerhöhung des Gases. So wird zwar der CO₂- und H₂O-Gehalt des Topgases nach der vorgeschaltenen, im Stand der Technik bereits bekannten, CO₂-Entfernung wiederum erhöht, allerdings in jenem Bereich, der durch die Wechselwirkung zwischen Gaszusammensetzung und der Stelle der Einleitung des Topgases am Schacht des Hochofens bestimmt wird. Die Erhöhung des CO₂ und H₂O-Anteils ist darüber hinaus derart geringfügig, dass bezüglich der Verfahrensweise im nächstliegenden Stand der Technik keine bedeutende Erniedrigung der Reduktionsarbeit festgestellt werden kann.

Als Vorteile dieses Verfahrens sind weiters zu beachten:

Durch die gegenüber dem Stand der Technik modifizierte Stelle der Gaszufuhr in den Hochofen ist es möglich, das Topgas auf dem einfachen Wege der Teilverbrennung auf die gewünschte Temperatur zu erwärmen, da Anteile an CO₂ und H₂O nicht grundsätzlich störend wirken. Die umständliche Art der Erwärmung des Topgases durch Mischen mit heißen Stickstoff- oder Argongas, wie im Stand der Technik beschrieben, wird auf diese Weise überwunden. Die Erhöhung des Anteils der indirekten Reduktion im Hochofenprozess führt zu einer deutlichen Energieersparnis, womit der Hochofen an einem bedeutend besseren Betriebspunkt hinsichtlich Energie- und Gashaushalt betrieben werden kann.

Nach einem weiteren erfindungsgemäßen Merkmal wird das von CO₂ befreite Topgas zusätzlich zu seiner Teilverbrennung rekuperativ und/oder regenerativ vorerwärmt.

Dabei werden die rekuperative und/oder regenerative Erwärmung sowie die Teilverbrennung aufeinander und auf den Gesamtprozeß abgestimmt, wodurch eine besonders effiziente und einfache Möglichkeit der Einstellung des CO₂/H₂O-Gehaltes gegeben ist.

Ist die Stelle des Einleitens des reduzierenden Gases in den Hochofen bestimmt, wird der CO₂/H₂O-Gehalt des reduzierenden Gases durch gezielte Veränderung der Parameter der CO₂-Entfernung und/oder der Vorerwärmung und/oder der partiellen Oxidation passend für den Betrieb des Hochofens eingestellt.

Durch eine zweistufig ausgeführte Form der Erwärmung des Topgases, mit einer rekuperativen und/oder regenerativen Vorerwärmung und einer folgenden Teilverbrennung wird ein Auftreten von metal dusting, sowie eine übermäßige C-Ausscheidung im Hochofen verhindert.

Nach einer besonders bevorzugten Ausführungsform der Erfindung wird das von CO₂ und H₂O befreite Topgas vor seiner Teilverbrennung rekuperativ oder regenerativ auf einen Temperaturbereich zwischen 300 und 600° C, vorzugsweise zwischen 400 und 500° C, vorerwärmt.

Mit dieser Maßnahme ist eine besonders günstige Ausgestaltung des Prozesses möglich, die sich insbesondere durch die besonders vorteilhafte Abstimmung der Vorerwärmung mit der Teilverbrennung auszeichnet. Durch die rekuperative und/oder regenerative Art der Vorerwärmung wird der CO₂/H₂O-Gehalt des Topgases kaum bzw. nur minimal erhöht, welches sich im weiteren Verfahren als vorteilhaft erweisen kann.

Im folgenden wird ein nicht einschränkendes Ausführungsbeispiel der Erfindung anhand von einer schematischen Zeichnung näher erläutert. Es zeigt:

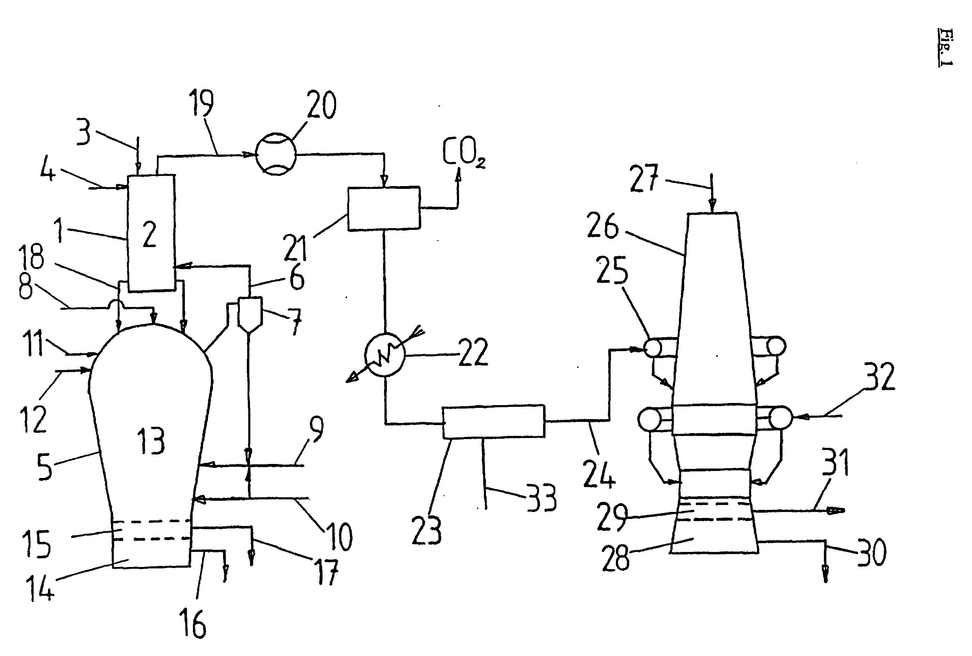

Fig. 1 schematisch eine erfindungsgemäße Anlage sowie einen schematischen Verfahrensablauf zur Herstellung von Roheisen oder flüssigen Stahlvorprodukten aus eisenerzhältigen Einsatzstoffen

Mit **1** ist eine als Reduktions-Schachtofen ausgebildete Direktreduktionseinrichtung bezeichnet, in deren Reduktionszone **2** von oben über eine Zuleitung **3** stückige eisenoxidhältige Einsatzstoffe, gegebenenfalls zusammen mit über eine Zuleitung **4** eingebrachten ungebrannten Zuschlägen, chargiert werden. Der Schachtofen **1** steht mit einem Einschmelzvergaser **5** in Verbindung, in dem aus Kohlenstoffträgern und sauerstoffhältigem Gas ein Reduktionsgas erzeugt wird, welches über eine Zuleitung **6** dem Schachtofen **1** zugeführt wird, wobei in der Zuleitung **6** eine Gasreinigungsund/oder Gaskühlungseinrichtung **7** vorgesehen ist (sind).

Der Einschmelzvergaser **5** weist eine Zuführung **8** für feste, stückige Kohlenstoffträger, eine Zuleitung **9** für Rückführung von Stäuben, eine Zuleitung **10** für sauerstoffhältige Gase und Zuleitungen **11, 12** für bei Raumtemperatur flüssige oder gasförmige Kohlenstoffträger, wie Kohlenwasserstoffe, sowie für gebrannte Zuschläge auf. In dem Einschmelzvergaser **5** sammelt sich unterhalb der Einschmelzvergasungszone **13** schmelzflüssiges Roheisen **14** und schmelzflüssige Schlacke **15,** die über Abstiche **16, 17** abgestochen werden.

Das im Schachtofen **1** in der Reduktionszone **2** zu Eisenschwamm reduzierte stückige Erz wird zusammen mit den in der Reduktionszone **2** gebrannten Zuschlägen über, den Schachtofen **1** mit dem Einschmelzvergaser **5** verbindende, Leitungen **18** in den Einschmelzvergaser überführt, beispielsweise mittels nicht dargestellter Austragsschnecken.

Am oberen Teil des Schachtofens **1** schließt eine Topgas-Ableitung **19** für das sich in der Reduktionszone **2** bildende Topgas an. Dieses Topgas, das eine Temperatur von etwa 200-400° C aufweist, wird über eine Gasreinigungseinrichtung **20** einem CO₂-Wäscher **21** zugeleitet, bei dessen Eintritt es in etwa Umgebungstemperatur aufweist. Die chemische Zusammensetzung des Topgases lautet im wesentlichen wie folgt:

| | CO₂ | CO | H₂ | N₂+Rest |
|---|---|---|---|---|
| Vol% | 35 | 40 | 20 | 5 |

Nach Austritt aus dem CO₂-Wäscher weist das nun weitgehend CO₂-freie Topgas im wesentlichen folgende chemische Zusammensetzung auf:

| | CO₂ | CO | H₂ | N₂+Rest |
|---|---|---|---|---|
| Vol% | 2 | 60 | 30 | 8 |

Das Topgas wird weiters einem Rekuperator oder einem Regenerator **22** zugeführt, in dem es auf eine Temperatur von etwa 450 °C aufgewärmt wird. Danach gelangt das gereinigte im wesentlichen CO₂-freie Topgas in einen Reaktor **23,** in dem es unter Zuführung von sauerstoffhältigem Medium, insbesondere reinem Sauerstoff, durch eine Leitung **33** teilweise verbrannt wird. Dabei erreicht das Gas eine Temperatur von etwa 850° C. Das teilverbrannte Gas weist im wesentlichen folgende Zusammensetzung auf:

| | CO₂ | CO | H₂ | N₂+Rest |
|---|---|---|---|---|
| Vol% | 5 | 58 | 29 | 8 |

Das aufgeheizte Topgas wird nun über eine Leitung **24** einer Ringleitung **25** eines Hochofens **26** zugeführt, und im unteren Bereich des Hochofenschachtes in den Hochofen eingeleitet. Dem Hochofen, der von beliebiger herkömmlicher Bauart sein kann, werden über eine Zuleitung **27** von oben Eisenoxide samt Koks und Zuschlägen zugeleitet. Schmelzflüssiges Roheisen **28** und schmelzflüssige Schlacke **29** werden in üblicher Weise über Abstiche **30, 31** abgeführt. Heißwind wird über die Heißwindzuleitung **32** zugeführt.

Erfindungsgemäß ergeben sich bei einem derartigen Verfahren sowie einer derartigen Anlage folgende Vorteile:
- Besonders effiziente Erweiterung der Eisenherstellungskapazität bei bereits vorhandenem Hochofen durch das Direktreduktionsverfahren, da das Topgas aus dem Direktreduktionsverfahren vorteilhaft im Hochofen eingesetzt wird, und solcherart eine Verwertung des bei dem Direktreduktionsverfahren anfallenden Topgases zur zusätzlichen Herstellung von Roheisen in vorhandenen Hochöfen erfolgt
- Leistungssteigerung des Hochofens durch Erhöhung des Reduktionsgrades über indirekte Gasreduktion des Möllers und damit Verbesserung des Wärmehaushaltes im Rast und Herdbereich des Hochofens
- Effizientere Kalzinierung von stückigen Zuschlägen, falls diese im Hochofen direkt eingesetzt werden

## Patentansprüche

1. Verfahren zur Herstellung von Roheisen oder flüssigen Stahlvorprodukten in einem Hochofen, wobei mindestens ein Teilstrom eines aus einem Reduktions-Schachtofen (1) austretenden Topgases weitgehend von CO₂ befreit wird, gegebenenfalls erwärmt, und in den Hochofen als Reduktionsgas eingeleitet wird, **dadurch gekennzeichnet, dass** das weitgehend CO₂-freie Topgas in den unteren Bereich des Hochofenschachtes eingeleitet und das weitgehend CO₂-freie Topgas vor seiner Einleitung in den Hochofenschacht durch eine Teilverbrennung erwärmt wird.

2. Verfahren nach Anspruch 1, wobei ein Teil der eisenerzhältigen Einsatzstoffe in dem Reduktions-Schachtofen (1) mittels eines Reduktionsgases reduziert wird, und wobei die erhaltenen reduzierten Eisenpartikel in einem Einschmelzvergaser (5) unter Zuführung von Kohle (8) und sauerstoffhältigem Gas (10) bei gleichzeitiger Bildung des Reduktionsgases eingeschmolzen werden, und das Reduktionsgas der Reduktionszone (2) des Reduktions-Schachtofens (1) zugeführt wird.

3. Verfahren nach Anspruch 1 oder 2, **dadurch gekennzeichnet, dass das** weitgehend CO₂-freie Topgas durch die Teilverbrennung auf über 750° C erwärmt wird.

4. Verfahren nach Anspruch 3, **dadurch gekennzeichnet, dass** das von CO₂ befreite Topgas vor seiner Teilverbrennung rekuperativ und/oder regenerativ, vorzugsweise auf einen Temperaturbereich zwischen 300° C und 600° C, vorerwärmt wird.

5. Anlage zur Durchführung des Verfahrens nach Anspruch 1, mit mindestens einem Hochofen zur Herstellung von Roheisen oder flüssigen Stahlvorprodukten, sowie mit mindestens einem Reduktions-Schachtofen (1) für stückiges Eisenerz, der mindestens eine Ableitung (18) für das darin gebildete Reduktionsprodukt sowie mindestens eine Topgas-Ableitung (19) aufweist, wobei die Topgasleitung (19) in eine CO₂-Entfernungseinrichtung (21) mündet, und wobei weiters zur Einbringung des warmen, weitgehend CO₂-freien Topgases in den Hochofen (26) mindestens eine weitere Leitung (25) vorgesehen ist, **dadurch gekennzeichnet, dass** zumindest eine Leitung (25) zur Einbringung des warmen Topgases in den unteren Bereich des Hochofen-Schachtes des Hochofens sowie ein leitungsmäßig mit der CO₂-Entfemungseinrichtung sowie dem Hochofen-Schacht verbundenen Reaktor zur Teilverbrennung des Topgases vor dessen Einleitung in den Hochofen-Schacht vorgesehen ist.

6. Anlage nach Anspruch 5, bei welcher der Reduktions-Schachtofen (1), mindestens eine Zuleitung (6) für ein Reduktionsgas aufweist, und bei welcher mindestens ein Einschmelzvergaser (5) vorgesehen ist, in den mindestens eine das Reduktionsprodukt aus dem Reduktions-Schachtofen abführende Leitung (18) mündet, und der eine Anzahl von Zuleitungen (8, 9, 10) für sauerstoffhältige Gase, gegebenenfalls Stäube, und Kohlenstoffträger, sowie mindestens eine in den Reduktions-Schachtofen mündende Ableitung (6) für gebildetes Reduktionsgas aufweist.

7. Anlage nach Anspruch 5 oder 6, **dadurch gekennzeichnet, dass** mindestens eine Leitung (33) zur Zuführung von sauerstoffhältigern Medium zur Teilverbrennung des Topgases, vorzugsweise in einen Heizreaktor (23), vorgesehen ist.

## Claims

1. Process for producing pig iron or liquid primary steel products in a blast furnace, CO₂ being substantially removed from at least a partial stream of a top gas emerging from a reduction shaft furnace (1), and this partial stream if appropriate being heated and being introduced into the blast furnace as reduction gas, **characterized in that** the top gas which is substantially free of CO₂ is introduced into the lower region of the blast-furnace shaft and the substantially CO₂-free top gas is heated by partial combustion before it is introduced into the blast-furnace shaft.

2. Process according to Claim 1, in which a portion of the iron-ore-containing charge materials is reduced in the reduction shaft furnace (1) by means of a reduction gas, and in which the reduced iron particles obtained are melted in a melter gasifier (5), with coal (8) and oxygen-containing gas (10) being supplied, the reduction gas being formed at t'he same time, and the reduction gas is fed to the reduction zone (2) of the reduction shaft furnace (1).

3. Process according to Claim 1 or 2, **characterized in that** the substantially CO₂-free top gas is heated to over 750°C by the partial combustion.

4. Process according to Claim 3, **characterized in that** the top gas from which CO₂ has been removed, prior to its partial combustion, is recuperatively and/or re-generatively preheated, preferably to a temperature range of between 300°C and 600°C.

5. Plant for carrying out the process according to Claim 1, having at least one blast furnace for producing pig iron or liquid primary steel products, and having at least one reduction shaft furnace (1) for lumpy iron ore, which has at least one outlet line (18) for the reduction product formed therein and at least one top-gas outlet line (19), the top-gas line (19) opening into a CO₂ removal device (21), and furthermore at least one further line (25) for introducing the warm, substantially CO₂-free top gas into the blast furnace (26) being provided, **characterized in that** at least one line (25) for introducing the warm top gas into the lower region of the shaft of the blast furnace and a reactor which is connected by means of lines to the CO₂ removal device and the blast-furnace shaft for partial combustion of the top gas before it is introduced into the blast-furnace shaft are provided.

6. Plant according to Claim 5, in which the reduction shaft furnace (1) has at least one feedline (6) for a reduction gas, and in which at least one melter gasifier (5) is provided, into which at least one line (18) which carries the reduction product out of the reduction shaft furnace opens and which has a number of feedlines (8, 9, 10) for oxygen-containing gases, if appropriate dusts, and carbon carriers, as well as at least one outlet line (6), which opens into the reduction shaft furnace, for reduction gas which is formed.

7. Plant according to Claim 5 or 6, **characterized in that** at least one line (33) for feeding oxygen-containing medium for partial combustion of the top gas, preferably into a heating reactor (23), is provided.

## Revendications

1. Procédé de fabrication de fonte brute ou d'un pré-produit d'acier liquide dans un haut-fourneau, dans lequel au moins une partie de l'écoulement d'un gaz de tête qui sort d'un four de réduction à cuve (1) est largement débarrassé du CO₂, éventuellement réchauffé et introduit comme gaz réducteur dans le haut-fourneau, **caractérisé en ce que** le gaz de tête largement débarrassé du CO₂ est introduit dans la zone inférieure du puits du haut-fourneau, le gaz de tête largement débarrassé du CO₂ étant réchauffé par combustion partielle avant son introduction dans le puits du haut-fourneau.

2. Procédé selon la revendication 1, dans lequel une partie des matières premières contenant du fer est réduite dans le four de réduction à cuve (1) au moyen d'un gaz réducteur et dans lequel les particules de fer réduites contenues sont fondues dans un gazéificateur de fusion (5) par apport de charbon (8) et de gaz (10) contenant de l'oxygène en formant simultanément le gaz réducteur, le gaz réducteur étant apporté dans la zone de réduction (2) du four de réduction à cuve (1).

3. Procédé selon la revendication 1 ou 2, **caractérisé en ce que** le gaz de tête largement débarrassé du CO₂ est réchauffé au-delà de 750°C par combustion partielle.

4. Procédé selon la revendication 3, **caractérisé en ce que** le gaz de tête débarrassé du CO₂ est préchauffé avant sa combustion partielle par récupération et/ou régénération, de préférence dans une plage de température comprise entre 300°C et 600°C.

5. Installation en vue de la mise en oeuvre du procédé selon la revendication 1, qui comporte au moins un haut-fourneau de fabrication de fonte brute ou de pré-produits d'acier liquide, ainsi qu'au moins un four de réduction à cuve (1) pour du minerai de fer en morceaux qui présente au moins une évacuation (18) du produit de réduction qui y est formé ainsi qu'au moins une évacuation (19) du gaz de tête, le conduit (19) de gaz de tête débouchant dans un dispositif (21) d'enlèvement du CO₂, au moins un autre conduit (25) étant en outre prévu pour l'apport dans le haut-fourneau (26) du gaz de tête chaud largement débarrassé du CO₂, **caractérisée en ce qu'**au moins un conduit (25) d'introduction du gaz de tête chaud est prévu dans la zone inférieure du puits du haut-fourneau, un réacteur de combustion partielle du gaz de tête avant son introduction dans le puits du haut-fourneau étant également prévu dans le conduit qui relie le dispositif d'enlèvement du CO₂ et le réacteur relié au puits du haut-fourneau.

6. Installation selon la revendication 5, dans laquelle le four de réduction à cuve (1) présente au moins un conduit (6) pour un gaz réducteur, et dans lequel au moins un gazéificateur de fusion (5) dans lequel est prévu au moins un conduit (18) qui évacue du four de réduction à cuve le produit de réduction est prévu, et dans laquelle un certain nombre de conduits (8, 9, 10) de gaz qui contiennent de l'oxygène, éventuellement des poussières et des supports de carbone, ainsi qu'une évacuation (6) du gaz réducteur formé, qui débouche dans le four de réduction à cuve.

7. Installation selon la revendication 5 ou 6, **caractérisée en ce qu'**au moins un conduit (33) d'apport d'un fluide contenant de l'oxygène est prévu pour la combustion partielle du gaz de tête, de préférence dans un réacteur de chauffage (23).
